(19) Europäisches Patentamt
European Patent Office
Office européen des brevets

(11) **EP 3 381 984 A1**

(12) **EUROPÄISCHE PATENTANMELDUNG**

(43) Veröffentlichungstag:
**03.10.2018   Patentblatt 2018/40**

(21) Anmeldenummer: **17164231.7**

(22) Anmeldetag: **31.03.2017**

(51) Int Cl.:
**C09C 1/24** (2006.01)     **C01G 49/00** (2006.01)
**C01G 49/06** (2006.01)     **C09D 1/00** (2006.01)
**C09D 7/12** (2006.01)     **C08K 3/18** (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **LANXESS Deutschland GmbH
50569 Köln (DE)**

(72) Erfinder: **Die Erfindernennung liegt noch nicht vor**

(54) **AL-HALTIGE EISENOXIDPIGMENTE**

(57)     Aluminium-haltige Eisenoxidpigmente der Formel $Fe_{2-x}Al_xO_3$ mit x-Werten von 0,01 bis 0,25, dadurch gekennzeichnet, dass sie einen a*-Wert von 30,5 bis 32,5 CIELAB-Einheiten, einen b*-Wert von 25,5 bis 30,5 CIELAB-Einheiten jeweils als Purton mit Lichtart D65/10° gemessen im Alkydharz WorléeKyd P 151 nach DIN EN ISO 787-25 : 2007, besitzen.

Fig. 1: Verlauf der $C_{ab}*$-Werte in Polyethylen (HD-PE) in Abhängigkeit von der Verarbeitungstemperatur

**Beschreibung**

Die Erfindung betrifft neue Al-haltige Eisenoxidpigmente, ein Verfahren zu ihrer Herstellung und ihre Verwendung zum Einfärben von Pasten, Lacken, Kunststoffen, Papier und Baumaterialien.

**Stand der Technik**

Hochwertige Eisenoxidrot-Pigmente, die den Stand der Technik repräsentieren, sind üblicherweise phasenreine Hämatite mit $Fe_2O_3$-Gehalten von 96,5 Gew. % bis zu 99,5 Gew. %.

Im Falle der Eisenoxid Direktrot-Pigmente sind bis zu 2,5 Gew. % Wasser enthalten, das weitestgehend im Hämatit-Gitter gebunden ist, während die durch Kalzination zugänglichen Rotpigmente frei von Kristallwasser sind und somit höhere $Fe_2O_3$ - Gehalte aufweisen.

Zur Herstellung dieser Rotpigmente existieren zahlreiche Verfahren, die dem Stand der Technik entsprechen, wobei in den vergangenen Jahren durch verschiedene Maßnahmen Verbesserungen bei den Pigmenteigenschaften erreicht werden konnten.

Besondere industrielle Bedeutung haben die Copperas-, Fäll- und Penniman-Verfahren sowie die Kalzination von Eisenoxid-Vorstufen auf Basis von Goethit und Magnetit.

Wichtige Einsatzgebiete dieser Rotpigmente sind Farben und Lacke (lösemittelhaltig, wässrig bzw. Pulverlacke), Kunststoffe sowie Papier und Laminate mit Pigmentierungshöhen bis zu ca. 35 Gew.-%.

Für die Messung der Farbeigenschaften von Eisenoxid-Rot-Pigmenten gibt es seit langem bestehende Testmethoden, bei denen die Farbigkeit von mit Eisenoxid-Rot-Pigmenten eingefärbten Medien wie Kunststoff-Prüfkörpern oder Lacksystemen gemessen werden.

Als Standard-Parameter zur Messung der Farbigkeit von Eisenoxid-Rot-Pigmenten haben sich die Parameter des sogenannten CIELAB-Farbraums etabliert. Dabei ist jede wahrnehmbare Farbe in diesem dreidimensionalem Farbraum durch den Farbort mit den Koordinaten L* (Helligkeit), a* (Rot-Grün-Wert) und b* (Gelb-Blau-Wert) definiert. Je positiver ein a*-Wert ist, desto stärker ist die Farbe Rot ausgeprägt, und je positiver ein b*-Wert ist, desto stärker ist die Farbe Gelb ausgeprägt. Die Farbe Blau ist dagegen umso stärker ausgeprägt, je negativer der b*-Wert ist. Neben diesen Parametern wird auch oft die Farbsättigung $C_{ab}*$ (auch Chroma, Chromatizität oder Buntheit) angegeben. Dieser Wert ergibt sich direkt aus den Werten a* und b* und stellt die Quadratwurzel der Summe der Quadrate von a* und b* dar. Die Werte a*, b*, L*, und $C_{ab}*$ sind dimensionslose Werte, die üblicherweise als "CIELAB-Einheiten" bezeichnet werden.

Bei der Farbmessung von Eisenoxid-Rot-Pigmenten hat sich für Lacksysteme die Prüfung in einem langöligen Alkydharz (nach DIN EN ISO 11664-4:2011-07 und DIN EN ISO 787-25:2007) etabliert. Als mögliches Alkydharz wurde früher das Alkydal L 64 der Firma Bayer verwendet. Mittlerweile werden andere, ähnliche Alkydharze wie das WorléeKyd P 151 der Firma Worlée Chemie GmbH eingesetzt.

Die entsprechende Farbmessung im Kunststoff erfolgt beispielsweise in Polyethylen (High Density Polyethylene, HDPE) bei einer Pigmentierungshöhe von 1 Gew.%.

Weiterhin wird für die Einfärbung von Kunststoffen oft gefordert, dass sich die Farbeigenschaften bei der Einwirkung von Temperaturen, wie sie typischerweise bei der Verarbeitung benötigt werden, möglichst wenig ändern. Ein wichtiges Beurteilungskriterium ist dabei die Veränderung der Farbsättigung $C_{ab}*$ gegenüber dem Ausgangswert.

Ein bereits lange im Markt etabliertes Rotpigment stellt das Copperas Red® R 1599D der Firma Huntsman dar. Insbesondere der b*-Wert dieses Produktes ist allerdings noch verbesserungswürdig. Gleiches gilt auch beispielsweise für andere im Stand der Technik beschriebene Hämatit-Rotpigmente wie die aus der WO2016/038152 (siehe Tabelle 1).

Tabelle 1: Farbwerte in WorléeKyd P 151 (Purton, Lichtart D65/10°)

| Rotpigmente gemäß Stand der Technik | a* | b* | Cab* | Al-Gehalte [%] |
|---|---|---|---|---|
| R1599 D (Huntsman) | 31,4 | 24,5 | 39,9 | - |
| Beispiel 1 WO 2016/038152 | 31,1 | 24,7 | 39,6 | - |
| Beispiel 3 DE 102004/024013A1 | 31,3 | 23,0 | 38,8 | 1,0 |
| Beispiel 1 DE2836941A1 | 30,2 | 23,0 | 38,0 | 0,95 |

Zur weiteren Verbesserung dieser Rotpigmente oder deren besserer Bereitstellung wurden bereits zahlreiche Versuche unternommen.

In der DE3500470 wurde beispielsweise unter Verwendung des Fällmittels MgO und einer speziellen Fällungsmethodik versucht, einen Al-dotierten Hämatit mit einem verbesserten Farbton bereitzustellen (siehe Beispiele 7 und 8). Zwar wird dort durch den Einsatz von MgO gegenüber NaOH im Al-freien Hämatit eine leichte Erhöhung des b*-Wertes (siehe Vergleichsbeispiel B vs A) festgestellt, jedoch wurden in der DE'470 selbst für die Al-dotierten Hämatite noch immer verbesserrungswürdige absolute Farbwerte, insbesondere b*-Werte gefunden. Im Übrigen führt die Präsenz von Magnesium zur Bildung von Mg-Ferriten mit keiner guten Coloristik.

Auch in der EP 1380542A1 hat man versucht, einen Weg zu beschreiten, um verbesserte Rotpigmente bereitzustellen. So wird ausgehend von einer Eisennitrat/Aluminiumnitrat-Lösung unter Verwendung organischer Verbindungen ein Gel hergestellt, das nach der Kalzinierung ein Al-dotiertes Eisenoxid ergibt, welches bei seiner optimalen Glühtemperatur von 800 °C (siehe Fig. 4B) noch immer mit einem a*-Wert von nur 27,6 CIELAB Einheiten nicht sehr farbrein ist. Außerdem hat sich dieses Al-dotierte Pigment auch gegenüber dem reinen Hämatit, welcher bei seiner optimalen Glühtemperatur von 650 °C (siehe Fig. 4A) einen höheren a*-Wert von immerhin 29 CIELAB Einheiten hat, koloristisch nicht verbessert. Insofern führt auch der Weg in EP'542 nicht zu dem gewünschten Ziel.

In der DE2826941 werden ebenfalls Al-haltige Rotpigmente beschrieben, die nach dem Nitrobenzolreduktionsverfahren erhalten werden, wobei jedoch ebenfalls Rotpigmente mit einer noch verbesserungsfähigen Koloristik erhalten werden (vergl. Tabelle 1 unten).

Nach DE 102004/024013 A1 werden Al-haltige Eisenoxid-Rotpigmente durch Beschichtung von feinteiligen Goethit ($\alpha$-FeOOH)-Vorstufen mit Aluminiumverbindungen und nachfolgende Kalzination hergestellt. Die Nacharbeitung beispielsweise von Beispiel 3 dieser Schrift lieferte Al-haltige Eisenoxid-Rotpigmente, deren Farbeigenschaften aber noch verbesserungswürdig sind (Tab.1).

Aufgabenstellung

Aufgabe der vorliegenden Erfindung war es daher, Rotpigmente zur Verfügung zu stellen, die den Farbraum gegenüber dem Stand der Technik vorhandenen Eisenoxidrotpigmente erweitern. Vorzugsweise sollen sie auch eine höhere Farbsättigung $C_{ab}$* besitzen und insbesondere eine verbesserte Hitzestabilität, beispielsweise in Kunststoffen, aufweisen. Es wurde gefunden, dass spezielle Al-haltige Eisenoxidpigmente diese Aufgabe lösen.

**Beschreibung**

Die Erfindung betrifft daher Al-haltige Eisenoxidpigmente der Formel $Fe_{2-x}Al_xO_3$ mit x-Werten von 0,01 bis 0,25, dadurch gekennzeichnet, dass sie einen a*-Wert von 30,5 bis 32,5 CIELAB-Einheiten und einen b*-Wert von 25,5 bis 30,5 CIELAB-Einheiten, jeweils gemessen als Purton mit Lichtart D65/10° im Alkydharz WorléeKyd P 151 besitzen.

Die Farbmessung der erfindungsgemäßen Al-haltigen Eisenoxide erfolgt in einem langöligen Alkydharz WorléeKyd P 151 der Firma Worlée Chemie GmbH nach DIN EN ISO 787-25:2007.

Bevorzugt liegt das erfindungsgemäße Al-haltige Eisenoxid in einer Hämatitstruktur vor. Dabei befindet sich das Aluminium vorzugsweise auf den oktaedrischen Gitterplätzen und substituiert dadurch $Fe^{3+}$ Ionen.

Bevorzugte Al-haltige Eisenoxide weisen eine Farbsättigung $C_{ab}$* von 39,8 bis 44,6 CIELAB-Einheiten auf. Dabei stellt $C_{ab}$* die Quadratwurzel der Summe der Quadrate von a* und b*, gemessen in dem obigen Lacksystem, dar.

Die erfindungsgemäßen Pigmente besitzen vorzugsweise eine hohe Hitzestabilität gemessen in HDPE Polyethylen mit bei einer 1 %igen Pigmentierung, bestimmt gemäß DIN EN 12877 - 2 durch eine Veränderung ($\Delta C_{ab}$*) der Farbsättigung ($C_{ab}$*) von weniger als 3 CIELAB-Einheiten, vorzugsweise weniger als 1,5 CIELAB-Einheiten bei einer Temperaturerhöhung von 200 auf 320°C.

In einer bevorzugten Ausführungsform der erfindungsgemäßen Pigmente steht in der Formel der Al-Index x für eine Zahl von 0,01 bis 0,10, insbesondere von 0,025 bis 0,075.

Ebenfalls bevorzugt sind erfindungsgemäße Pigmente, in der in der Formel der Al-Index x für eine Zahl von 0,11 bis 0,25, insbesondere von 0,12 bis 0,15 steht.

Ebenfalls bevorzugt weisen die erfindungsgemäßen Pigmente einen Wassergehalt von weniger als 0,8 Gew.%, bevorzugt von weniger als 0,5 Gew.% auf.

In einer weiteren bevorzugten Ausführungsform weisen die erfindungsgemäßen Pigmente einen Chloridgehalt von kleiner als 0,1 Gew.-%, vorzugsweise kleiner als 0,01 Gew.%, bezogen auf das Pigment auf.

Auch die Menge an Mangan und Chrom ist bevorzugt sehr gering. Vorzugsweise beträgt die Summe an Mangan und Chrom kleiner als 500 ppm, besonders bevorzugt kleiner als 100 ppm, bezogen auf das Pigment.

Auch für Magnesium gilt, dass dessen Anteil bevorzugt sehr gering ist. Vorzugsweise beträgt die Menge an Magnesium kleiner als 500 ppm, besonders bevorzugt kleiner als 100 ppm, bezogen auf das Pigment.

Die erfindungsgemäßen Pigmente weisen vorzugsweise eine spezifische Oberfläche nach der BET-Methode von 6,5 bis 12,5 $m^2$/g auf.

Die erfindungsgemäßen Pigmente können auch beschichtet sein. Dabei können sie eine oder mehrere Beschichtungen ausgewählt aus anorganischen und/oder organischen Verbindungen aufweisen.

Organische Beschichtungsmittel umfassen beispielsweise mehrwertige Alkohole, Polyethylen-, Polypropylenglykole, deren Veretherungsprodukte mit einwertigen Alkoholen und Veresterungsprodukte mit Carbonsäuren sowie Silikonöle.

Als anorganische Beschichtungsmittel kommen vorzugsweise farblose Oxide oder Hydroxide von Al, Si, Zr und Mg, insbesondere $Al_2O_3$ in Frage.

Sofern die erfindungsgemäßen Pigmente beschichtet sind, werden die Beschichtungsmittel vorzugsweise in einer Menge von 0,01 bis 3 Gew.-%, bezogen auf das Pigment, angewendet.

## Verfahren

Die Erfindung betrifft weiterhin ein Verfahren zur Herstellung der erfindungsgemäßen Pigmente, enthaltend wenigstens die Schritte a) Fällung, b) Oxidation und c) Kalzination, dadurch gekennzeichnet, dass man

a1) eine wässrige Lösung enthaltend Eisen-, Sulfat- und Aluminium-Ionen, wobei das molare Verhältnis von Eisen- zu Al-Ionen 199 : 1 bis 7 : 1 beträgt, mit einer alkalischen Verbindung, insbesondere NaOH umsetzt, oder

a2) eine wässrige Lösung enthaltend Eisen- und Sulfat-Ionen mit einer alkalischen Verbindung, insbesondere NaOH, und wenigstens einer Aluminiumverbindung, vorzugsweise Alkali-Aluminat, insbesondere Natrium-aluminat umsetzt, wobei das molare Verhältnis von Eisen der Lösung zu Aluminium der Aluminiumverbindung 199 : 1 bis 7 : 1 beträgt,

b) die nach Schritt a) erhaltene wässrige Suspension in Gegenwart eines Oxidationsmittels oxidiert und

c) das nach b) erhaltenen Oxidationsprodukt bei einer Temperatur von 500 bis 1100 °C in oxidierender Atmosphäre kalziniert.

Das Fe:Al Verhältnis von 199:1 bis 7:1 entspricht dabei in der angestrebten Zusammensetzung $Fe_{2-x}Al_xO_3$ einem x-Wert von 0,01 bis 0,25.

## Fällung a1)

Die wässrige Lösung enthaltend Eisen-, Sulfat- und Aluminium-Ionen kann durch Mischen von entsprechenden Sulfat-haltigen Eisenlösungen mit Aluminium Ionen haltigen Lösungen erhalten werden, die wiederum einzeln aus entsprechenden Eisenvorläufern bzw. Aluminiumverbindungen erhalten werden können.

Beispielsweise können Eisen(II)-sulfate für entsprechende Eisensulfatlösungen aus Stahlbeizereien bzw. aus der $TiO_2$-Produktion nach dem Sulfatverfahren oder durch Auflösen von metallischem Eisen, Eisencarbonaten, Eisenhydroxiden oder Eisenoxiden in Schwefelsäure erhalten werden.

Zur Herstellung der erfindungsgemäßen Pigmente ist es bevorzugt, sehr reine Eisenrohstoffe in Form von Eisen(II)-sulfat-Lösungen mit einem Eisengesamtgehalt von 80 bis 95 g/l und einem Gehalt von Mangan und Chrom in Summe von kleiner 250 mg/l einzusetzen.

Die verwendete Lösung enthält vorzugsweise auch einen Magnesiumgehalt von kleiner als 500, vorzugsweise kleiner als 100 ppm, bezogen auf die Lösung.

Bevorzugt ist eine wässrige Lösung, enthaltend Eisen-, Sulfat- und Aluminium-Ionen für die Fällung nach Schritt a), in der die Eisen-Ionen in Form einer Mischung von Eisen (II) und Eisen (III) Ionen vorliegen, vorzugsweise mit einem Anteil von Fe(III) von 5 bis 30 Mol%, insbesondere 10 bis 20 Mol% Fe(III), bezogen auf die Gesamteisenmenge in der Lösung.

Die Einstellung der entsprechend bevorzugten Fe(III)-Anteile im jeweiligen Eisen(II)/(III)-Sulfatgemisch kann entweder durch Zusatz entsprechender Mengen an Eisensalzen, vorzugsweise von Eisen(III)-sulfat oder durch partielle Oxidation der Eisensalz-, vorzugsweise Eisen(II)-sulfat-Lösung beispielsweise mit Luftsauerstoff, vorzugsweise bei Temperaturen von 80 °C oder darüber, insbesondere bei 80 bis 100 °C, oder mit $H_2O_2$ bei Temperaturen vorzugsweise von 20 bis 70°C erfolgen.

Als Al-Komponente in der wässrigen Lösung, enthaltend Eisen-, Sulfat- und Aluminium-Ionen können Aluminiumsalze wie z. B. Chloride, Sulfate oder auch Nitrate Verwendung finden, wobei Al(III)- Sulfate besonders bevorzugt sind.

Die wässrige Lösung, enthaltend Eisen-, Sulfat- und Aluminium-Ionen für den Schritt a1) enthält vorzugweise ein molares Verhältnis von Eisen in Form von Fe(II) und/oder Fe (III) zu Al-Ionen von 79:1 bis 26:1, vorzugsweise von 17,2:1 bis 7:1, insbesondere von 15,7:1 bis 12,3:1. Ein Fe:Al Verhältnis von 79:1 bis 26:1, entspricht dabei in der angestrebten Zusammensetzung $Fe_{2-x}Al_xO_3$ einem x-Wert von 0,025 bis 0,075, ein Fe:Al Verhältnis von 17.2:1 bis 7:1 entspricht dabei einem x-Wert von 0,11 bis 0,25 und ein Fe:Al Verhältnis von 15,7:1 bis 12,3:1 entspricht dabei einem x-Wert von 0,12 bis 0,15.

Die erfindungsgemäß eingesetzte wässrige Lösung, enthaltend Eisen-, Sulfat- und Aluminium-Ionen werden vorzugsweise durch Mischen der Fe(III)- und/oder Fe(II)-haltigen Sulfat-Lösung und entsprechender Al-haltiger Lösungen bereitgestellt.

Die Umsetzung in Schritt a1) erfolgt vorzugsweise so, dass die alkalische Verbindung als Fällmittel in einem geeigneten Reaktionsbehälter mit Rührer, Begasungsbehälter sowie elektrischer Heizung auf die Reaktionstemperatur erwärmt wird.

Die Reaktionstemperatur liegt vorzugsweise bei 20 bis 100 °C, insbesondere bei 80 bis 100 °C, besonders bevorzugt bei 85 bis 100 °C.

Die wässrige Lösung, enthaltend Eisen-, Sulfat- und Aluminium-Ionen wird vorzugsweise zu der vorgelegten alkalischen Verbindung, vorzugsweise in Form seiner wässrigen Lösung, zudosiert. Die Zugabe erfolgt dabei vorzugsweise bei der Reaktionstemperatur.

Die Fällung erfolgt dabei vorzugsweise bei einem pH-Wert von größer 10, insbesondere bei einem pH von 10,5 bis 14.

Die Zugabe erfolgt vorzugsweise unter Rühren. Sofern ein bestimmtes Verhältnis von Fe(II) und Fe(III) bereits in der wässrigen Lösung, enthaltend die Eisen-, Sulfat- und Aluminium-Ionen, eingestellt wurde, ist es bevorzugt, die Fällungsreaktion unter Inertgas ablaufen zu lassen. Ggf. kann das Fe(II)/(III) Verhältnis aber auch erst während der Fällung durch die oben beschriebene Oxidation eingestellt werden.

Die einzusetzende Menge an alkalischer Verbindung für die Fällung ergibt sich aus den Mengen der Eisen- und Aluminiumionen, wobei ein Mol-Verhältnis von $Fe_{gesamt}$ zu $OH^-$ von 0,45 bis 0,55 sowie von Al(III) zu $OH^-$ von 0,33 bevorzugt ist, sowie ggf. vorhandener freier, zu neutralisierender Säure, beispielsweise Schwefelsäure.

**Fällung a2)**

In einer weiteren bevorzugten Ausführungsform der Erfindung sind die Vorgehensweise und die Mengenverhältnisse der Eisen- zu Aluminium-Ionen grundsätzlich dieselben wie bei der Fällung a1), mit dem Unterschied, dass die Aluminium-Verbindung nicht in dem Eisen(II)/(III)-Sulfatgemisch enthalten ist, sondern zusammen mit der alkalischen, als Fällmittel dienenden Verbindung zudosiert wird. Dabei kann die Dosierung von alkalischer Verbinung und Aluminiumverbindung getrennt zu dem Eisen-Sulfatgemisch erfolgen oder die Aluminiumverbindung kann zusammen mit der alkalischen Verbindung in Form einer gemeinsamen wässrigen Lösung verwendet werden.

Bevorzugt ist die Aluminiumverbindung beispielsweise als wässrige Na-AluminatLösung, die mit den alkalischen Fällmitteln vermischt wird, um dann die löslichen Al-Ionen zu liefern.

Als alkalische Verbindung, die als Fällmittel dient, eignen sich die unter a1) genannten.

Vorzugsweise wird das alkalische Fällmittel mit einer Alkali-Aluminatlösung vermischt vorgelegt und dazu das Eisen(II)/(III)-Sulfatgemisch zudosiert.

**Oxidation b)**

Im Anschluss an die Fällung erfolgt die Oxidation mit einem Oxidationsmittel. Vorzugsweise wird als Oxidationsmittel ein sauerstoffhaltigen Gas, wie beispielsweise Luft eingesetzt. Die Oxidation erfolgt dabei vorzugsweise in dem nach Schritt a1) oder a2) erhaltenen wässrigen Medium, insbesondere in der durch die Fällung erhaltenen Suspension. Bevorzugt wird das Oxidationsmittel, insbesondere das sauerstoffhaltige Gas in das nach Schritt a1) oder a2) erhaltene wässrige Medium eingeleitet.

Die Oxidation nach Schritt b) erfolgt dabei insbesondere bei einer Temperatur von 20 bis 100 °C, insbesondere bei 80 bis 100 °C, besonders bevorzugt bei 85 bis 100 °C.

Der Verlauf der Oxidation sowie das Ende des Oxidationsschrittes können beispielsweise durch eine EMK-Messung mit einer handelsüblichen Redoxelektrode im Reaktionsgefäß kontrolliert werden. Die Verarmung der Reaktionsmischung an gelösten Eisen(II)-Ionen wird durch einen Potenzialsprung angezeigt.

Nach erfolgter Oxidation wird die Pigmentvorstufe, vorzugsweise der gebildete Magnetit, abfiltriert und vorzugsweise gewaschen, insbesondere so lange, bis die Filtratleitfähigkeit unterhalb 2000 $\mu$S/cm, bevorzugt unterhalb 800 $\mu$S/cm, besonders bevorzugt unterhalb 200 $\mu$S/cm liegt. Danach schließt sich bevorzugt eine Trocknung des Filterkuchens an, insbesondere bei einer Temperatur von 30 bis 250, bevorzugt von 30 bis 120°C.

**Kalzinierung c)**

Die Herstellung der erfindungsgemäßen Al-haltigen Eisenoxid-Pigmente mit der Zusammensetzung $Fe_{2-x}Al_xO_3$ erfolgt durch Kalzination des nach Schritt b) erhaltenen Oxidationsproduktes, vorzugsweise in Form des isolierten, gewaschenen und getrockneten Filterkuchens, auch als Al-haltiger Magnetit bezeichnet, bei einer Temperatur von 500 bis 1100 °C, vorzugsweise von 600 bis 975 °C, vorzugsweise in Gegenwart eines sauerstoffhaltigen Gases, insbesondere von Luft.

Bei der Kalzination gemäß Schritt c) des erfindungsgemäßen Verfahrens ist zu berücksichtigen, dass die Höhe der optimalen Kalzinierungstemperatur vom Al-Gehalt des nach Schritt b) erhaltenen Oxidationsproduktes abhängt. Die optimale Kalzinierungstemperatur ist dabei die Temperatur, bei der der maximale a*-Wert (Rotanteil) erhalten wurde. Diese kann in einer Reihe verschiedener Glühtemperaturen ermittelt werden.

Zur weiteren Verbesserung der koloristischen Eigenschaften sowie der besseren Verarbeitbarkeit in Bindemitteln und Kunststoffen können die nach Schritt c) erhaltenen erfindungsgemäßen Pigmente noch einer Mahlung und/oder einer Beschichtung unterzogen werden.

Im Falle einer anorganischen Beschichtung ist es bevorzugt, diese an den Schritt c) anzuschließen. Als bevorzugte anorganische Beschichtungsmittel kommen vorzugsweise farblose Oxide oder Hydroxide von Al, Si, Zr und Mg, insbesondere $Al_2O_3$ in Frage.

Ebenfalls bevorzugt ist es, die erfindungsgemäßen Al-haltigen Eisenoxide mit oder ohne anorganische Beschichtung noch einer Mahlung zu unterziehen. Geeignete Mahlmethoden sind beispielsweise Strahlmahlungen, Pendelmahlungen oder auch Nassmahlungen.

Bei der Mahlung können vorzugsweise organische Beschichtungsmittel zugesetzt werden, beispielsweise mehrwertige Alkohole, Polyethylen-, Polypropylenglykole, deren Veretherungsprodukte mit einwertigen Alkoholen und Veresterungsprodukte mit Carbonsäuren sowie Silikonöle. Diese Beschichtungsmittel können zugleich als Mahlhilfsmittel wirken.

Die vorzugsweise zuzudosierenden Mengen an Beschichtungsmitteln können bei anorganischen Beschichtungsstoffen von 0,01 bis 3, bei organischen Beschichtungsstoffen von 0,01 bis 1 Gew.%, bezogen auf das Pigment, liegen. Die Summe von anorganischen und organischen Beschichtungsmitteln ist dabei bei 0,01 bis 3 Gew.%.

**Verwendung**

Die Erfindung betrifft weiterhin die Verwendung der erfindungsgemäßen Pigmente zum Einfärben von Pasten, Lacken, Kunststoffen, Papier und Baumaterialien.

**Messmethoden**

**Prüfung der Farbwerte im Purton in WorléeKyd P 151 der Firma Worlée Chemie GmbH**

Die Ermittlung der Farbwerte im Purton erfolgte nach DIN EN ISO 787-25:2007) unter Verwendung der unten beschriebenen Prüfpaste.

Es wurden 5 g eines thixotropierten langöligen Alkydharzes (WorléeKyd P 151), auf den unteren Teil einer Tellerfarbenausreibemaschine (TFAM) mit 240 mm Plattendurchmesser aufgebracht und das jeweilige Eisenoxid-Rotpigment mit der Prüfpaste zu einer farbigen Paste mit 10% PVK (Pigment-Volumen-Konzentration) verarbeitet.

Die Prüfpaste enthält 95Gew% Alkydalharz (Worléekyd P151 der Firma Worlee-Chemie GmbH, DE) und als Thixotropierungsmittel 5 Gew% Luvotix HAT (Lehmann & Voss & Co KG, DE). Dabei wird das Luvotix in das auf 70 bis 75 °C vorgewärmte Alkydalharz eingerührt und bei 95 °C bis zur Auflösung eingearbeitet. Die abgekühlte Paste wird anschließend auf einem Dreiwalzwerk Bläschenfrei gewalzt.

Die Einwaage der Rotpigmente erfolgte gemäß

$$m_P = \frac{PVK * m_b * \rho_p}{(100 - PVK) * \rho_b}$$

$m_P$ = Masse des Eisenoxid-Rotpigments
PVK = Pigment-Volumen-Konzentration
$m_b$ = Masse Bindemittel
$\rho_p$ = Dichte Pigment
$\rho_b$ = Dichte Bindemittel

Die fertige Paste wurde in einen Pastenteller überführt und auf einem Farbmessgerät Datacolor 600 unter der Messgeometrie d / 8° und der Lichtart D65 / 10° mit Glanz farbmetrisch vermessen (CIELAB-Farbraum nach DIN 5033 Teil 7).

**Bestimmung der Hitzestabilität von Eisenoxid-Rotpigmenten in Polyethylen (High Density Polyethylene, HD-PE)**

Die Prüfung der Hitzestabilität in Polyethylen (HD-PE) erfolgte an DIN EN 12 877 - 2 nach Verfahren B im Purton.

HD-PE-Qualität: DOW KT 10000 UE (Granulat)

Verarbeitungsgeräte:

- Einwellen-Extruder Schwabenthan Polytest 30 P

- Spritzgussmaschine Arburg 221 K- 350 - 100

Farbmessgerät und Farbmessung

- Datacolor 600

   Messgeometrie d / 8°

   Lichtart D 65 / 10° mit Glanz

Durchführung

14 g Eisenoxid-Rotpigment wurden mit 1400 g HD-PE-Granulat (1%ige Pigmentierung) in einem Polybeutel in einer PE-Trommel 20 Minuten verkollert. Danach erfolgte die Extrusion im Einwellen-Extruder bei 180°C und 60 UpM. Dieses vordispergierte Granulat (3 mm Korngröße) wurde in der oben benannten SpritzgussMaschine in PE-Plättchen der Abmessung 6*4 cm sowie 3 mm Dicke überführt. Die Starttemperatur betrug 200°C (gleich Bezug für die Hitzestabilität $\Delta C_{ab}$*), und die Temperaturerhöhung erfolgte in 20°C-Schritten bis auf 320°C.

**Beispiele**

Beispiel 1

Durch Auflösen von auf elektrolytischem Weg erhaltenen metallischen Eisen (Handelsprodukt der Fa. Allied Metals Corp.) mit einem Gehalt von je < 1 ppm Mn und Cr in Schwefelsäure (96 Gew.%, reinst, mit Wasser verdünnt; Handelsprodukt der Fa. Bernd Kraft) wurde in bekannter Weise eine Eisen(II)-Sulfatlösung mit einem Gehalt von 92,15 g/l Fe $^{2+}$, 0,08 g/l Fe$^{3+,}$ 1,22 Gew.% freier Schwefelsäure und einem pH-Wert von 0,9 hergestellt (Lösung 1).

Durch Auflösen von auf elektrolytischem Weg erhaltenen metallischen Eisen (Handelsprodukt der Fa. Allied Metals Corp.) mit einem Gehalt von je < 1 ppm Mn und Cr in Schwefelsäure reinst (Handelsprodukt der Fa. Bernd Kraft) wurde in gleicher Weise eine zweite Partie Eisen (II)-Sulfatlösung erzeugt. 12 Mol $FeSO_4$ in Form dieser Lösung wurden mit 12 Mol Wasserstoffperoxid in Form von 946 ml einer 35 gew.%igen Lösung (Handelsprodukt der Fa. Merck) und 5 Mol $H_2SO_4$ in Form der genannten 96gew.%igen Säure umgesetzt, wobei die Temperatur von ca. 20 auf bis auf ca. 70° anstieg. Es wurde eine vorwiegend Eisen(III) enthaltende Sulfatlösung mit 64,6 g/l Fe$^{3+}$, 11,15 g/l Fe$^{2+}$ sowie 3,02 Gew.% freier Schwefelsäure erhalten (Lösung 2).

Durch Mischen von 12,45 l (15,4 kg) Lösung 1, 3,12 l (3,82 kg) Lösung 2 und 396 ml (523 g) $Al_2(SO_4)_3$-Lösung einem Gehalt von 4,3 Gew.% Al (Handelsprodukt der Fa. Feralco) wurde ein Fe(II)/Fe(III)/Al(III)-sulfat-Gemisch mit der molaren Zusammensetzung 20,542 Mol Fe(II), 3,625 Mol Fe(III) und 0,833 Mol Al(III) und einem Gesamtvolumen von 16,0 l erzeugt.

In einem 30-l-Rührbehälter, der mit Begasungseinrichtung, Beheizung, Rührer und Flüssigkeitsdosiereinrichtungen ausgestattet ist, wurden 7,17 l Natronlauge (Gehalt 316 g/l NaOH) vorgelegt sowie unter $N_2$-Begasung (80 l/h) auf 90 °C aufgeheizt. Zu dieser Lauge wurde das genannte Fe(II)/Fe(III)/Al(III)-sulfat-Gemisch innerhalb von 45 min bei

90 °C unter $N_2$-Begasung und Rühren gleichmäßig zudosiert.

Nach Beendigung der Fällungsreaktion erfolgte bei einer Temperatur von 90 °C innerhalb von 9,5 h Reaktionszeit die Oxidation zum Magnetit (Oxidationsprodukt) durch Einleiten von Luft (ca. 40 l/h).

Eine Zusammenstellung der Ansatzmengen für die Herstellung des Oxidationsproduktes ist in Tabelle 2 gegeben.

Die wässrigen Suspensionen der Oxidationsprodukte wurden in bekannter Weise filtriert, auf eine Filtratleitfähigkeit < 200 $\mu$S/cm gewaschen und nach Trocknung des Filterkuchens bei einer Temperatur von 40°C wie folgt charakterisiert:

| | | |
|---|---|---|
| spezifische Oberfläche nach der BET-Methode: | 32,6 | $m^2/g$ |
| Fe-Gehalt: | 67,9 | Gew.-% |
| Al-Gehalt: | 1,0 | Gew.-% |

Das so isolierte Oxidationsprodukt wurde bei der optimalen Glühtemperatur von 775 °C (Genauigkeit $\pm$ 5 °C) und einer Verweilzeit von 30 min in oxidierender Atmosphäre (in Gegenwart von Luft) in einem Kammerofen kalziniert. Zur Ermittlung der optimalen Glühtemperatur wurden verschiedene Temperaturen ausprobiert (siehe Tabelle 3). Das erhaltene erfindungsgemäße Pigment wurde - wie in Tabelle 4 angegeben - charakterisiert und koloristisch in WorléeKyd P 151 (Purton) geprüft (Farbwerte siehe Tabelle 5).

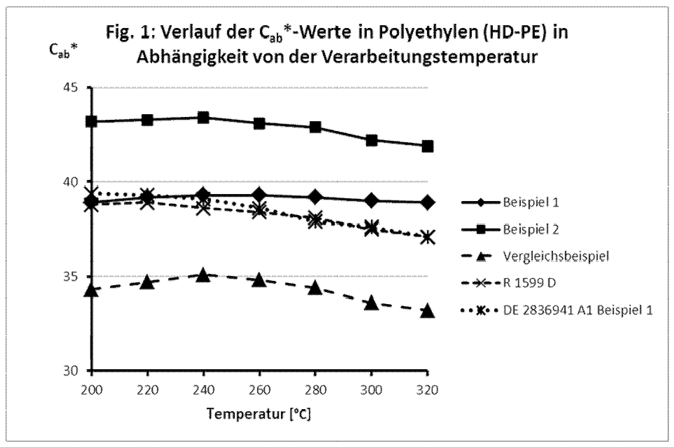

Das gleiche Rotpigment wurde in HD-PE verarbeitet und die Hitzestabilität durch Messung der Farbsättigung $C_{ab}^*$ in Abhängigkeit von der Verarbeitungstemperatur zwischen 200 und 320 °C ermittelt (siehe Tabelle 6 und Fig. 1).

Beispiel 2

In diesem Beispiel wurde entsprechend Beispiel 1 verfahren, wobei das Sulfatgemisch eine molare Zusammensetzung von 19,833 Mol Fe(II), 3,5 Mol Fe(III) sowie 1,667 Mol Al(III) und ein Gesamtvolumen von 15,0 l aufwies. Es wurde durch Mischen von 10,84 l (13,5 kg) einer Eisen(II)-Sulfatlösung mit einem Gehalt von 99,21 g/l $Fe^{2+}$, 0,12 g/l $Fe^{3+}$ und 0,095 Gew.% $H_2SO_4$; 3,03 l (3,705 kg) der in Beispiel 1 genannten Lösung 2; sowie 1,1 l (1,36 kg) einer $Al_2(SO_4)_3$-Lösung mit einem Al-Gehalt von 3,3 Gew. % (Handelsprodukt der Fa. Feralco) gewonnen. Vorgelegt wurden 7,39 l Natronlauge mit einem Gehalt von 316 g/l NaOH.

Die Oxidationszeit betrug ca. 10,5 Stunden bei 85°C.

Eine Zusammenstellung der Ansatzmengen für die Herstellung des Oxidationsproduktes ist in Tabelle 2 gegeben.

Die Charakterisierung dieses Oxidationsproduktes nach Trocknung lieferte folgende Daten:

| | | |
|---|---|---|
| spezifische Oberfläche nach der BET-Methode: | 35,8 | $m^2/g$ |
| Fe-Gehalt: | 65,2 | Gew.-% |
| Al-Gehalt: | 3,1 | Gew.-% |

Das Oxidationsprodukt wurde bei der optimalen Glühtemperatur von 900 °C (Genauigkeit $\pm$ 5 °C) und 30 min Verweilzeit in oxidierender Atmosphäre in einem Kammerofen kalziniert. Zur Ermittlung der optimalen Glühtemperatur wurden verschiedene Temperaturen ausprobiert (siehe Tabelle 3). Das erhaltene erfindungsgemäße Pigment wurde - wie in Tabelle 4 angegeben - charakterisiert und koloristisch in WorléeKyd P 151, (Purton) geprüft (Farbwerte siehe Tabelle 5).

Das gleiche Rotpigment wurde in HD-PE verarbeitet und, wie in Beispiel 1 beschrieben, die Hitzestabilität durch Messung der Farbsättigung $C_{ab}^*$ ermittelt (siehe Tabelle 6 und Abb. 1).

Vergleichsbeispiel I

In diesem Vergleichsbeispiel wurde ein Oxidationsprodukt ohne Al-Zusatz entsprechend der Verfahrensweise von Beispiel 1 hergestellt. Das Sulfatgemisch hatte dabei eine molare Zusammensetzung von 21,25 Mol Fe(II) sowie 3,75 Mol Fe(III) bei einem Gesamtvolumen von 16,3 l (siehe Tabelle 2). Es wurde durch Mischen von 13,79 l (16,93 kg) einer Eisen(II)-Sulfatlösung mit einem Gehalt von 86,07 g/l $Fe^{2+}$, 0,57 g/l $Fe^{3+}$ und 0,86 Gew.% $H_2SO_4$ sowie 2,49 l (3,12 kg) einer Eisen(III)-Sulfatlösung mit einem Gehalt von 84,12 g/l $Fe^{3+}$, 0,19 g/l $Fe^{2+}$ und 3,56 Gew.% freier Schwefelsäure gewonnen. Vorgelegt wurden 7,53 l Natronlauge mit einem Gehalt von 320 g/l NaOH.

Nach einer Oxidationszeit von ca. 7 Stunden bei 85°C sowie Aufarbeitung der wässrigen Suspension wurde ein Oxidationsprodukt mit folgenden Daten erhalten:

| | | |
|---|---|---|
| spezifische Oberfläche nach der BET-Methode: | 19,0 | $m^2/g$ |
| Fe-Gehalt: | 70,4 | Gew.-% |
| Al-Gehalt: | 0,01 | Gew.-% |

Die Glühung dieses Oxidationsproduktes erfolgte bei der optimalen Glühtemperatur von 700 °C (Genauigkeit ± 5 °C) und 30 min Verweilzeit in oxidierender Atmosphäre in einem Kammerofen. Zur Ermittlung der optimalen Glühtemperatur wurden verschiedene Temperaturen ausprobiert (siehe Tabelle 3).

Der erhaltene nicht-erfindungsgemäße Pigment ohne Al-Zusatz wurde - wie in Tabelle 4 angegeben - charakterisiert und koloristisch in WorléeKyd P 151, (Purton) geprüft (Farbwerte siehe Tabelle 5).

Das gleiche Rotpigment wurde in HD-PE verarbeitet und, wie in Beispiel 1 beschrieben, die Hitzestabilität durch Messung der Farbsättigung $C_{ab}*$ ermittelt (siehe Tabelle 6 und Abb. 1).

Die erfindungsgemäßen Al-haltigen Pigmente aus Beispiel 1 (0,81 % Al) und Beispiel 2 (2,2 % Al) repräsentieren hochwertige Al-haltige Eisenoxidrotpigmente mit spezifischen Oberflächen nach der BET-Methode im Bereich von 8,6 bis 9,6 $m^2/g$ und weisen eine sehr hohe chemische Reinheit auf, die durch Mn- und Cr-Gehalte in Summe unterhalb von 100 ppm, durch Cl-Gehalte unterhalb von 250 ppm sowie durch geringe $H_2O$-Gehalte von kleiner als 0,01 Gew.-% gekennzeichnet sind (siehe Tabelle 5).

Gegenüber den vier Hämatit-Rotpigmenten des Standes der Technik liegen die Farbwerte der erfindungsgemäßen Al-haltigen Pigmente in WorléeKyd P 151 (Purton) deutlich höher (siehe Tabelle 5) und erschließen somit für Eisenoxidrotpigmente neue Bereiche im CIELAB-Farbraum, und zwar mit:

$\Delta a*$　= 0.7 CIELAB-Einheiten
$\Delta b*$　= 5,2 CIELAB-Einheiten
$\Delta C*$　= 4,0 CIELAB-Einheiten

Gleichzeitig sind die erfindungsgemäßen Al-haltigen Rotpigmente im Vergleich zum Stand der Technik durch eine deutlich höhere Hitzestabilität in HD-PE (als $\Delta C_{ab}*$-Werte von 200 gegen 320 °C, siehe Tabelle 6) bei deutlich höherer Farbsättigung $C_{ab}*$ gekennzeichnet, und zwar:

$\Delta C_{ab}*$ (erfindungsgemäß) bis -1,3 CIELAB-Einheiten gegenüber $\Delta C_{ab}*$ (Stand der Technik) von -1,7 bis -2,3 CIELAB-Einheiten

$C_{ab}*$ (erfindungsgemäß) bis zu 43,4 CIELAB-Einheiten gegenüber $C_{ab}*$ (Stand der Technik) bis zu 39,4 CIELAB-Einheiten

**Tabelle 3: Ermittlung der optimalen Glühtemperaturen** (Farbwerte in WorléeKyd P 151, Purton, Lichtart D65/10°)

| Pigment | Glühtemperatur [°C] | spezifische Oberfläche (BET) [$m^2/g$] | Farbwerte, Purton | |
|---|---|---|---|---|
| | | | a* | b* |
| Beispiel 1 | 700 | 13,9 | 26,1 | 23,9 |
| | 750 | 11,8 | 27,5 | 24,0 |
| | **775** | **8,6** | **31,9** | **25,9** |
| | 800 | 7,5 | 31,8 | 25,1 |
| | 825 | 5,7 | 30,7 | 22,4 |
| | 850 | 4,7 | 30,2 | 21,2 |
| | 900 | 3,0 | 25,2 | 14,0 |
| Beispiel 2 | 700 | 14,2 | 31,4 | 28,9 |
| | 750 | 13,4 | 31,2 | 29,1 |
| | 800 | 11,8 | 31,4 | 29,6 |
| | 850 | 11,6 | 31,7 | 29,8 |
| | **900** | **9,6** | **32,1** | **29,6** |
| | 950 | 8,5 | 31,5 | 29,2 |

(fortgesetzt)

| Pigment | Glühtemperatur | spezifische Oberfläche | Farbwerte, Purton | |
|---|---|---|---|---|
| | [°C] | (BET) [m$^2$/g] | a* | b* |
| Vergleichsbeispiel I | 600 | 7,9 | 29,1 | 21,0 |
| | 650 | 7,1 | 29,8 | 21,1 |
| | **700** | **6,2** | **30,1** | **20,7** |
| | 750 | 5,7 | 30,0 | 20,0 |
| | 800 | 4,9 | 29,4 | 18,8 |

Die optimale Glühtemperatur ist durch fette Schrift hervorgehoben.

**Tabelle 4: Charakterisierung der erfindungsgemäßen Pigmente nach Kalzinierung der Oxidationsprodukte**

| Pigment | optimale Glühtemperatur zum Rotpigment | spezifische Oberfläche | Analysenwerte | | | | | |
|---|---|---|---|---|---|---|---|---|
| | | (BET) | Fe gesamt [Gew.%] | Al | | Mn [ppm] | Cr [ppm] | Cl [ppm] |
| | [°C] | [m$^2$/g] | | [Gew. %] | x-Wert* | | | |
| Beispiel 1 | 775 | 8,6 | 69 | 0,81 | 0,047 | <1 | 22 | 3 |
| Beispiel 2 | 900 | 9,6 | 66 | 2,2 | 0,129 | 2,1 | 13 | 8 |
| Vergleichsbeispiel | 700 | 6,2 | 70,4 | <0,01 | <0,001 | n.b.** | n.b.** | n.b.** |
| * bezüglich Fe$_{2-x}$Al$_x$O$_3$,<br>**nicht bestimmt | | | | | | | | |

**Tabelle 5: Farbwerte in WorléeKyd P 151 (Purton, Lichtart D65/10°)**

| Pigmente gemäß Erfindung | a* | b* | $C_{ab}$* | Al-Gehalte | |
|---|---|---|---|---|---|
| | | | | [Gew. %] | x-Wert |
| Beispiel 1 | 31,9 | 25,9 | 41,1 | 0,81 | 0,047 |
| Beispiel 2 | 32,1 | 29,9 | 43,9 | 2,2 | 0,129 |
| Vergleichsbeispiel 1 | 30,0 | 20,7 | 36,5 | < 0,01 | <0,001 |
| **Rotpigmente gemäß Stand der Technik** | **a*** | **b*** | **$C_{ab}$*** | **Al-Gehalte** | |
| | | | | [Gew. %] | x-Wert |
| R1599 D | 31,4 | 24,5 | 39,9 | - | |
| Beispiel 1 WO 2016/038152 | 31,1 | 24,7 | 39,6 | - | |
| Beispiel 3 DE 102004/024013A1 | 31,3 | 23 | 38,8 | 1,0 | 0,059 |
| Beispiel 1 DE2836941A1 | 30,2 | 23 | 38 | 0,95 | 0,056 |

**Daten für Fig. 1**

| Verarbeitungs-temperatur [°C] | Beispiel 1 $C_{ab}$* | Beispiel 2 $C_{ab}$* | Vergleichsbeispiel $C_{ab}$* | R1599D (Huntsman) $C_{ab}$* | Beispiel 1 DE2836941A1 $C_{ab}$* |
|---|---|---|---|---|---|
| 200 | 38,9 | 43,2 | 34,3 | 38,8 | 39,4 |
| 220 | 39,2 | 43,3 | 34,7 | 38,9 | 39,3 |
| 240 | 39,3 | 43,4 | 35,1 | 38,6 | 39,1 |
| 260 | 39,3 | 43,1 | 34,8 | 38,4 | 38,6 |
| 280 | 39,2 | 42,9 | 34,4 | 38,1 | 37,9 |
| 300 | 39 | 42,2 | 33,6 | 37,5 | 37,6 |
| 320 | 38,9 | 41,9 | 33,2 | 37,1 | 37,1 |
| $\Delta C_{ab}$* (für $\Delta$T 200 zu 320 °C) | ±0 | -1,3 | -1,1 | -1,7 | -2,3 |

**Patentansprüche**

1. Aluminium-haltige Eisenoxidpigmente der Formel $Fe_{2-x}Al_xO_3$ mit x-Werten von 0,01 bis 0,25, **dadurch gekennzeichnet, dass** sie einen a*-Wert von 30,5 bis 32,5 CIELAB-Einheiten, einen b*-Wert von 25,5 bis 30,5 CIELAB-Einheiten jeweils als Purton mit Lichtart D65/10° gemessen im Alkydharz WorléeKyd P 151 nach DIN EN ISO 787-25 : 2007, besitzen.

2. Pigmente nach Anspruch 1, **dadurch gekennzeichnet, dass** sie eine Farbsättigung Cab* von 39,8 bis 44,6 CIELAB-Einheiten jeweils als Purton mit Lichtart D65/10° gemessen im Alkydharz WorléeKyd P 151 nach DIN EN ISO 787-25 : 2007, besitzen.

3. Pigmente nach wenigstens einem der Ansprüche 1 bis 2, **dadurch gekennzeichnet, dass** sie eine spezifische Oberfläche, nach der BET-Methode, zwischen 6,5 und 12,5 $m^2$/g aufweisen.

4. Pigmente nach wenigstens einem der Ansprüche 1 bis 3, **dadurch gekennzeichnet, dass** das Aluminium-haltige Eisenoxidpigment in einer Hämatitstruktur vorliegt.

5. Pigmente nach wenigstens einem der Ansprüche 1 bis 4, **dadurch gekennzeichnet, dass** in Summe der Gehalt an Mangan und Chrom kleiner als 500 ppm, besonders bevorzugt kleiner als 100 ppm, bezogen auf das Pigment beträgt.

6. Pigmente nach wenigstens einem der Ansprüche 1 bis 5, **dadurch gekennzeichnet, dass** die Menge an Magnesium kleiner als 500 ppm, besonders bevorzugt kleiner als 100 ppm, bezogen auf das Pigment beträgt.

7. Pigmente nach wenigstens einem der Ansprüche 1 bis 6, **dadurch gekennzeichnet, dass** die Pigmente einen Gehalt an Wasser von weniger als 0,8 Gew.%, bevorzugt von weniger als 0,5 Gew.% besitzen.

8. Pigmente nach wenigstens einem der Ansprüche 1 bis 7, **dadurch gekennzeichnet, dass** die Pigmente eine organische und/oder anorganische Beschichtung, insbesondere in einer Menge von 0,01 bis 3 Gew.-%, bezogen auf das Pigment, aufweisen.

9. Pigmente nach wenigstens einem der Ansprüche 1 bis 8, **dadurch gekennzeichnet, dass** sie eine Hitzestabilität gemessen in HDPE Polyethylen mit bei einer 1 %igen Pigmentierung, bestimmt gemäß DIN EN 12877 - 2 durch eine Veränderung ($\Delta C_{ab}$*) der Farbsättigung ($C_{ab}$* von weniger als 3 CIELAB-Einheiten, vorzugsweise weniger als 1,5 CIELAB-Einheiten bei Temperaturerhöhung von 200 auf 320°C aufweisen.

10. Pigmente gemäß wenigstens einem der Ansprüche 1 bis 9, **dadurch gekennzeichnet, dass** in der Formel der Al-Index x von 0,01 bis 0,10, insbesondere von 0,025 bis 0,075 beträgt.

11. Pigmente gemäß wenigstens einem der Ansprüche 1 bis 9, **dadurch gekennzeichnet, dass** in der Formel der Al-Index x von 0,11 bis 0,25, insbesondere von 0,12 bis 0,15 beträgt.

12. Verfahren zur Herstellung der Aluminium-haltigen Hämatit-Pigmente nach wenigstens einem der Ansprüche 1 bis 11, enthaltend wenigstens die Schritte a) Fällung, b) Oxidation und c) Kalzination, **dadurch gekennzeichnet, dass** man:

a1) eine wässrige Lösung enthaltend Eisen-, Sulfat- und Aluminium-Ionen, wobei das molare Verhältnis von Eisen- zu Al-Ionen 199 : 1 bis 7 : 1 beträgt, mit einer alkalischen Verbindung, insbesondere NaOH umsetzt, oder
a2) eine wässrige Lösung enthaltend Eisen- und Sulfat-Ionen mit einer alkalischen Verbindung, insbesondere NaOH, und wenigstens einer Aluminiumverbindung, vorzugsweise Alkali-Aluminat, insbesondere Natrium-aluminat umsetzt, wobei das molare Verhältnis von Eisen der Lösung zu Aluminium der Aluminiumverbindung 199 : 1 bis 7 : 1 beträgt,
b) die nach Schritt a1) oder a2) erhaltene wässrige Suspension in Gegenwart eines Oxidationsmittels oxidiert und
c) das nach b) erhaltenen Oxidationsprodukt bei einer Temperatur von 500 bis 1100 °C in oxidierender Atmosphäre kalziniert.

13. Verfahren nach Anspruch 12, **dadurch gekennzeichnet, dass** die wässrige Lösung, enthaltend Eisen-, Sulfat- und Aluminium-Ionen im Schritt a1), einen Anteil von Fe(III) von 5 bis 30 Mol%, insbesondere 10 bis 20 Mol% Fe(III), bezogen auf die Gesamteisenmenge in der Lösung aufweist.

14. Verwendung der Pigmente nach wenigstens einem der Ansprüche 1 bis 11 zur Einfärbung von Pasten, Lacken, Kunststoffen, Papier und Baumaterialien.

Fig. 1: Verlauf der $C_{ab}$*-Werte in Polyethylen (HD-PE) in Abhängigkeit von der Verarbeitungstemperatur

Europäisches
Patentamt

European
Patent Office

Office européen
des brevets

**EUROPÄISCHER RECHERCHENBERICHT**

Nummer der Anmeldung

EP 17 16 4231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 380 542 A2 (PRESIDENT OF OKAYAMA UNIVERSIT [JP]) 14. Januar 2004 (2004-01-14) | 1-11,14 | INV. C09C1/24 C01G49/00 C01G49/06 C09D1/00 C09D7/12 C08K3/18 |
| A | * Ansprüche 1,2 * * Absätze [0010] - [0017] * * Abbildung 4B * ----- | 12,13 | |
| X | EP 0 187 331 A2 (BAYER AG [DE]) 16. Juli 1986 (1986-07-16) | 12,13 | |
| A | * Ansprüche 1-7,9,10 * * Seite 5, Zeile 4 - Seite 7, Zeile 26 * * Beispiel 7 * * Tabelle 1 * ----- | 1-11 | |
| A | DE 10 2004 024013 A1 (BAYER CHEMICALS AG [DE]) 1. Dezember 2005 (2005-12-01) * Ansprüche 1-8 * ----- | 1-14 | |
| A,D | WO 2016/038152 A1 (LANXESS DEUTSCHLAND GMBH [DE]) 17. März 2016 (2016-03-17) * das ganze Dokument * ----- | 1-14 | |

| RECHERCHIERTE SACHGEBIETE (IPC) |
|---|
| C09C C01G C09D C08K |

Der vorliegende Recherchenbericht wurde für alle Patentansprüche erstellt

| Recherchenort | Abschlußdatum der Recherche | Prüfer |
|---|---|---|
| Den Haag | 29. Juni 2017 | Gerwann, Jochen |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes
  Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 16 4231

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-06-2017

| Im Recherchenbericht angeführtes Patentdokument | Datum der Veröffentlichung | Mitglied(er) der Patentfamilie | Datum der Veröffentlichung |
|---|---|---|---|
| EP 1380542 A2 | 14-01-2004 | CA 2434278 A1 | 09-01-2004 |
| | | EP 1380542 A2 | 14-01-2004 |
| | | JP 3728505 B2 | 21-12-2005 |
| | | JP 2004043208 A | 12-02-2004 |
| | | KR 20040005662 A | 16-01-2004 |
| | | TW 200402451 A | 16-02-2004 |
| | | US 2004007160 A1 | 15-01-2004 |
| EP 0187331 A2 | 16-07-1986 | AU 569188 B2 | 21-01-1988 |
| | | BR 8600055 A | 23-09-1986 |
| | | CA 1291317 C | 29-10-1991 |
| | | DE 3500470 A1 | 10-07-1986 |
| | | EP 0187331 A2 | 16-07-1986 |
| | | JP H0627006 B2 | 13-04-1994 |
| | | JP S61163121 A | 23-07-1986 |
| | | US 4753680 A | 28-06-1988 |
| DE 102004024013 A1 | 01-12-2005 | AU 2005202048 A1 | 01-12-2005 |
| | | BR PI0506385 A | 03-10-2006 |
| | | CA 2507331 A1 | 14-11-2005 |
| | | CN 1696208 A | 16-11-2005 |
| | | DE 102004024013 A1 | 01-12-2005 |
| | | EP 1605023 A2 | 14-12-2005 |
| | | ES 2389728 T3 | 30-10-2012 |
| | | JP 5001525 B2 | 15-08-2012 |
| | | JP 2006008990 A | 12-01-2006 |
| | | MX PA05005166 A | 06-12-2005 |
| | | US 2005274284 A1 | 15-12-2005 |
| | | ZA 200503859 B | 27-09-2006 |
| WO 2016038152 A1 | 17-03-2016 | AU 2015314215 A1 | 30-03-2017 |
| | | CA 2960836 A1 | 17-03-2016 |
| | | CN 106715336 A | 24-05-2017 |
| | | EP 3191409 A1 | 19-07-2017 |
| | | KR 20170056532 A | 23-05-2017 |
| | | WO 2016038152 A1 | 17-03-2016 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Patentdokumente**

- WO 2016038152 A
- DE 102004024013 A1
- DE 2836941 A1
- DE 3500470
- EP 1380542 A1
- DE 2826941